# EUROPÄISCHE PATENTSCHRIFT

(11) **EP 0 626 061 B1**
(45) Veröffentlichungstag und Bekanntmachung des Hinweises auf die Patenterteilung: **25.09.1996**
(21) Anmeldenummer: 93914542.1
(22) Anmeldetag: 19.01.1993
(51) Int. Cl.: G01C 9/06

(54) **MESSGERÄT**
MEASURING INSTRUMENT
APPAREIL DE MESURE

(30) Priorität: 22.01.1992 CH 185/92
(43) Veröffentlichungstag der Anmeldung: 30.11.1994
(73) Patentinhaber: HAUSMANN, Manfred, 9494 Schaan (LI)
(72) Erfinder: AUGUSTIN, Victor, CH-7000 Chur (CH); FISCHER, Eduard, CH-7000 Chur (CH)
(74) Vertreter: Dreiss, Fuhlendorf & Steimle Patentanwälte
(86) Internationale Anmeldenummer: EP9300111
(87) Internationale Veröffentlichungsnummer: WO9315377

(56) Entgegenhaltungen:
- EP-A- 0 168 150
- DE-A- 3 836 794
- FR-A- 2 368 694
- GB-A- 2 232 762
- TECHNISCHES MESSEN, Bd. 58, Nr. 3, März 1991, München DE, Seiten 101-105, XP224809; PFEIFFER et al.: 'Hochpräzises Inklinometer mit Optoelektronischer Neigungserfassung'
- DATABASE WPI, Week 7946, Derwent Publications Ltd., London, GB; AN 79-787946 & SU-A-649 951

## Beschreibung

Die vorliegende Erfindung betrifft ein optoelektronisches Meßgerät zur Bestimmung der Relativlage eines Objektes in Bezug auf eine Horizontalebene, mit einer wenigstens teilweise transparenten Meßkammer, in der zwei nicht mischbare Medien mit unterschiedlicher Dichte enthalten sind, wobei eines der Medien wenigstens teilweise transparent und mindestens das andere ein fluides Medium ist, und wobei die Relativlage aufgrund der Position des wenigstens teilweise transparenten Mediums in der Meßkammer bestimmt wird, mit einer Lichtquelle und einem lichtempfindlichen Sensor, auf welchen das von der Lichtquelle durch das wenigstens teilweise transparente Medium transmittierte Licht projiziert und die Projektion zur Bestimmung der Relativlage verwendet wird. Außerdem betrifft die Erfindung ein Verfahren zur Bestimmung der Relativlage eines Objektes in Bezug auf eine Horizontalebene mittels des Meßgerätes. Schließlich betrifft die Erfindung eine Verwendung des Meßgerätes.

Geräte zum Bestimmen der Relativlage bzw. des Winkels von Objekten gegenüber der Horizontalebene oder der Senkrechten sind bekannt. Das wohl bekannteste Gerät ist die sog. Wasserwaage bzw. Libelle, bei welcher eine Luftblase in einem gebogenen beidseitig verschlossenen Rohr in einer Flüssigkeit gehalten wird und sich diese Blase im ganzen Meßbereich genau im Zenith der Rohrbiegung befindet.

Im Zuge der Verbesserung der Meßgenauigkeit wurde dieses relativ grob anzeigende Gerät dadurch verfeinert, indem anstelle von Luft andere Gase verwendet werden, oder sogar eine zweite Flüssigkeit niedrigerer Dichte, die mit der ersten Flüssigkeit nicht mischbar und zudem transparent ist, in kleinster Menge in der ersten Flüssigkeit mit eingeschlossen ist, wobei die erste Flüssigkeit eingefärbt oder opak ist.

Durch entsprechende Optimierung der zwei nicht mischbaren fluiden Medien ist es möglich, Feinstbläschen zu erzeugen, um eine äußerst feine Messung mittels dem einer herkömmlichen Wasserwaage entsprechenden Prinzip zu ermöglichen. So werden heute spezielle Öle, flüssige Silikone, Edelgase, etx. für ein nach dem beschriebenen Prinzip arbeitenden Meßgerät verwendet. Trotzdem aber bleibt das Problem der genauen optischen Erfassung, da der Ablesegenauigkeit selbst beim feinsten Bläschen gewisse Grenzen gesetzt sind, wobei bei feinsten Bläschen der Ablesekomfort schlecht ist, d.h. ein optisches Erfassen der Bläschen ist kaum mehr möglich.

Eine optoelektronische Neigungserfassung ist aus der Literaturstelle "TECHNISCHES MESSEN", Bd. 58, Nr. 3, März 1991, München DE, Seiten 101-105, XP 224809 sowie aus der GB 2,232,762 A, der FR 2,368,694 A und der EP 168 150 A1 bekannt geworden. Diese bekannten Vorrichtungen erlauben aber nur Kinkelmessungen in einem engen Winkelbereich von ca. ± 20°. Eine 360°-Messung ist mit diesen Geräten nicht möglich.

Mit der DE 38 36 794 Al ist ein weiterer elektronischer Neigungsmesser bekannt geworden, der ein kreisbogenförmiges Rohr aufweist, in dem eine Luftblase eingeschlossen ist. Dieses Rohr wird radial von innen nach außen durchstrahlt. Im Zenith ist ein Sensor vorgesehen, der nach einer Neigung der Vorrichtung über eine Stellvorrichtung wieder in den Zenith zurückgeführt wird. Über die Stellbewegung wird der Neigungswinkel errechnet. Diese Vorrichtung ist relativ unhandlich und träge.

Der Erfindung liegt die Aufgabe zugrunde, eine Vorrichtung zu schaffen, die eine Messung über einen Winkel-Bereich von 360° erlaubt.

Diese Aufgabe wird erfindungsgemäß dadurch gelöst, daß die Lichtquelle, die Meßkammer und der lichtempfindliche Sensor hintereinander in einer horizontalen Achse angeordnet sind, daß die Lichtquelle auf einer Seite der Meßkammer und der lichtempfindliche Sensor auf der anderen Seite der Meßkammer angeordnet sind, daß die Meßkammer als kreisrundes Rohr oder als kreischeibenartiger Hohlkörper ausgebildet ist und daß die gesamte Projektion der Meßkammer auf den lichtempfindlichen Sensor abgebildet wird.

Vorgeschlagen wird ein optisches Meßgerät, das im wesentlichen nach dem bekannten Prinzip der Wasserwaage zur Bestimmung der Relativlage eines Objektes in Bezug auf eine Horizontalebene arbeitet. Das erfindungsgemäß vorgeschlagene Meßgerät umfaßt eine wenigstens teilweise transparente Meßkammer, beinhaltend zwei nicht mischbare Mediem mit unterschiedlicher Dichte, wobei eines der Medien wenigstens transparent bzw. lichtdurchlässsig und mindestens das andere ein fluides Medium ist, und wobei die Relativlage bzw. Winkellage des Objektes in Bezug auf die Horizontalebene aufgrund der Position des wenigstens teilweise transparenten bzw. lichtdurchlässigen Mediums in der Meßkammer bestimmt wird. Auf der einen Seite der Meßkammer ist eine Lichtquelle angeordnet, d.h. die Meßkammer wird einseitig von der Lichtquelle beleuchtet, und auf der gegenüberliegenden Seite der Meßkammer, d.h. auf der Beleuchtungsgegenseite, ist eine optische Meßzelle bzw. ein lichtempfindlicher flächiger Sensor angeordnet, auf welche bzw. auf welchen das von der Lichtquelle durch das wenigstens teilweise transparente bzw. lichtdurchlässige Medium transmittierte Licht projiziert wird, wobei die Projektion zur Bestimmung der Relativlage des Objektes in Bezug auf die Horizontalebene verwendet wird. Dabei kann das Licht beim Durchtritt durch das Medium auch polarisiert werden. Nachfolgend werden Ausführungsbeispiele beschrieben, bei denen das Licht ebenfalls polarisiert werden kann, so daß sich ein spezieller Hinweis hierauf bei jedem Beispiel erübrigt. Ferner wird darauf hingewiesen, daß die Projektion des Lichts unter Verwendung von Linsen oder anderen optischen Mitteln, wie Filter, Prismen usw. oder direkt, d.h. ohne Linsen und dergleichen durchführbar ist.

Vorzugsweise sind beide Medien fluide Medien und eines der Medien ein opakes bzw. lichtundurchlässiges Medium, wobei die beiden Medien in einem transparenten Hohlkörper, vorzugsweise aus Glas eingeschlossen sind.

Dabei muß mindestens eines der Medien flüssig sein, wobei das andere Medium ebenfalls flüssig oder gasförmig oder fest sein kann.

Je nach dem, ob das wenigstens teilweise transparente bzw. lichtdurchlässige Medium eine höhere oder eine kleinere Dichte als das andere Medium aufweist, ist das erstere im Zenith oder in der Zenithgegenseite des Hohlkörpers bzw. der Meßkammer angeordnet.

Je nach der zu messenden Relativlage bzw. des eingeschlossenen Winkels zwischen Objekt und Horizontalebene kann die Meßkammer bzw. der Hohlkörper verschiedenartig ausgebildet sein, mit vorzugsweise gleichbleibendem Querschnitt quer zum Rohr bzw. zur Scheibe.

Bei der für die Erfassung der Projektion angeordneten optischen Meßzelle bzw. beim lichtempfindlichen flächigen Sensor kann es sich bspw. um einen PSD-Detektor (position sensitive device) oder um einen CCD-Detektor (charged coupled device) handeln. Allerdings eignen sich dafür auch andere optische bzw. lichtempfindliche Meßzellen.

Für die Bestimmung der Relativlage eines Objektes in Bezug auf eine Horizontalebene mittels des vorab beschriebenen erfindungsgemäßen Meßgerätes wird von einer Lichtquelle, angeordnet auf einer Seite der Meßkammer, Licht durch die Meßkammer durch das wenigstens teilweise transparente bzw. lichtdurchlässige fluide Medium transmittiert und auf die auf der der einen Seite gegenüberliegenden anderen Seite angeordnete optische Meßzelle bzw. den lichtempfindlichen flächigen Sensor projiziert, wobei aus der Position der Projektion auf der Zelle bzw. auf dem Sensor die Relativlage des Objektes bzw. der Unterlage bestimmt wird.

Durch die Lage des Schwerpunktes des transmittierten Lichtfleckes oder des Schattens der Projektion auf dem positionsempfindlichen Lichtsensor wird die Relativlage bzw. Winkellage des Objektes bestimmt und mittels geeigneter Auswerte- und Anzeigemittel dargestellt.

Die erfindungsgemäß definierten Meßgeräte bzw. das Verfahren zu deren Betreiben eignet sich insbesondere für die Verwendung in einer elektronischen Wasserwaage. Weitere Verwendungen ergeben sich in elektronischen Nivelliergeräten, Nivellmetern, Kompensatoren und Geräten für die elektronische Erfassung der Beschleunigung eines Objektes. Verwendungen der erfindungsgemäßen Meßgeräte sind u.a. in den Ansprüchen 10 bis 13 charakterisiert.

Anschließend wird die Erfindung bspw. anhand bevorzugter erfindungsgemäßer Anordnungen näher erläutert. Dabei zeigen:
- Figuren 1 und 2: einen Längs- und Querschnitt einer ersten Ausführungsvariante eines erfindungsgemäßen Meßgerätes; und
- Figuren 3 und 4: im Längs- bzw. Querschnitt eine weitere Ausführungsvariante der Erfindung.

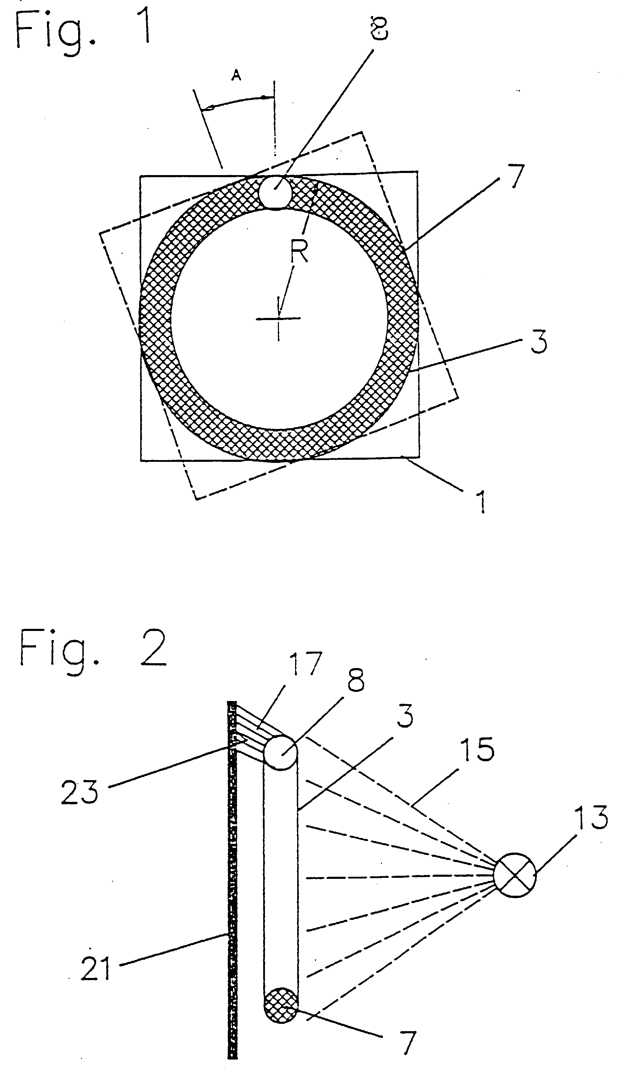

In den Figuren 1 und 2 ist im Längs- bzw. Querschnitt eine Meßkammer 1 dargestellt, enthaltend einen ringförmig oder ähnlich ausgebildeten Hohlkörper 3. Der kreisrund gebogene Hohlkörper 3 beinhaltet eine viskose lichtdurchlässige oder opake Flüssigkeit 7 mit einer Luftblase 8 oder einer Blase aus einem transparenten oder wenigstens teilweise transparenten Medium. Wie aus Fig. 2 deutlich erkennbar, ist auf einer Seite des Hohlkörpers 3 eine Lichtquelle 13 angeordnet. Die von dieser Lichtquelle 13 emittierten Lichtstrahlen 15 beleuchten einseitig den Hohlkörper 3. Da das Rohr glasartig ausgebildet ist, transmittiert ein Teil des Lichtes im Bereich der Luftblase 8 durch das Rohr hindurch und die entsprechend hindurchtretenden Lichtstrahlen 17 werden auf einen Sensor 21 projiziert, der auf der anderen Seite des Rohres angeordnet ist. Dabei wird auf dem lichtempfindlichen Sensor 21 ein Lichtfleck oder Schatten 23 erzeugt.

Wenn nun das Objekt, an welchem die erfindungsgemäße optische Meßkammer 1 gemäß Figuren 1 und 2 angeordnet ist, gegenüber der Horizontalebene geneigt wird (Figur 1), bewegt sich die Luftblase 8 oder die Blase des transparenten oder teilweise transparenten Mediums innerhalb des Hohlkörpers 3. Damit bewegt sich aber auch der Lichtfleck oder Schatten 23 auf dem lichtempfindlichen Sensor 21, womit die gestrichelt dargestellte abweichende Relativlage (A) des Objektes optisch erfaßbar ist. Das Erfassen des Lichtfleckes 23 und die Positionsauswertung dieses Lichtfleckes 23 auf dem lichtempfindlichen Sensor 21 erfolgt anhand an sich bekannter Techniken, indem es sich bspw. beim Sensor 21 um einen sog. positionsempfindlichen Detektor PSD (position sensitive device) handeln kann. Die Erfassung des Lichtfleckes bzw. der Projektion ist in diesem Fall besonders einfach, da automatisch immer der Schwerpunkt des Lichtfleckes 23 erfaßt wird, womit zusätzliche Rechenoperationen entfallen. Gewählt werden kann aber auch ein matrizenartiger Detektor CCD (charged couple device) in Form von Siliziumzellen, wo der Schwerpunkt des auf die Matrize projizierten Lichtfleckes 23 zuerst berechnet werden muß.

Anstelle einer Flüssigkeit und Luft können bspw. auch zwei verschiedene Flüssigkeiten gewählt werden, welche zwei getrennte Phasen bilden und welche unterschiedliche Dichte aufweisen. Anstelle von Luft kann auch ein Edelgas wie bspw. Helium gewählt werden. Da die optimale Wahl der Flüssigkeiten bzw. eines Gases und einer Flüssigkeit eine allgemein bekannte Technik darstellt, wird an dieser Stelle nicht näher darauf eingegangen.

Selbstverständlich ist es auch möglich, einen Festkörper mit niedriger Dichte in einer Flüssigkeit anzuordnen. Ebenfalls ist es möglich, in einer transparenten Flüssigkeit eine kleine Menge einer eingefärbten oder opaken Flüssigkeit einzuschließen, so daß in Umkehrung zum oben Beschriebenen auf dem lichtempfindlichen Sensor bzw. Detektor an Stelle eines Lichtfleckes ein dunkler Fleck erzeugt wird. Das Grundprinzip bleibt aber dabei dasselbe.

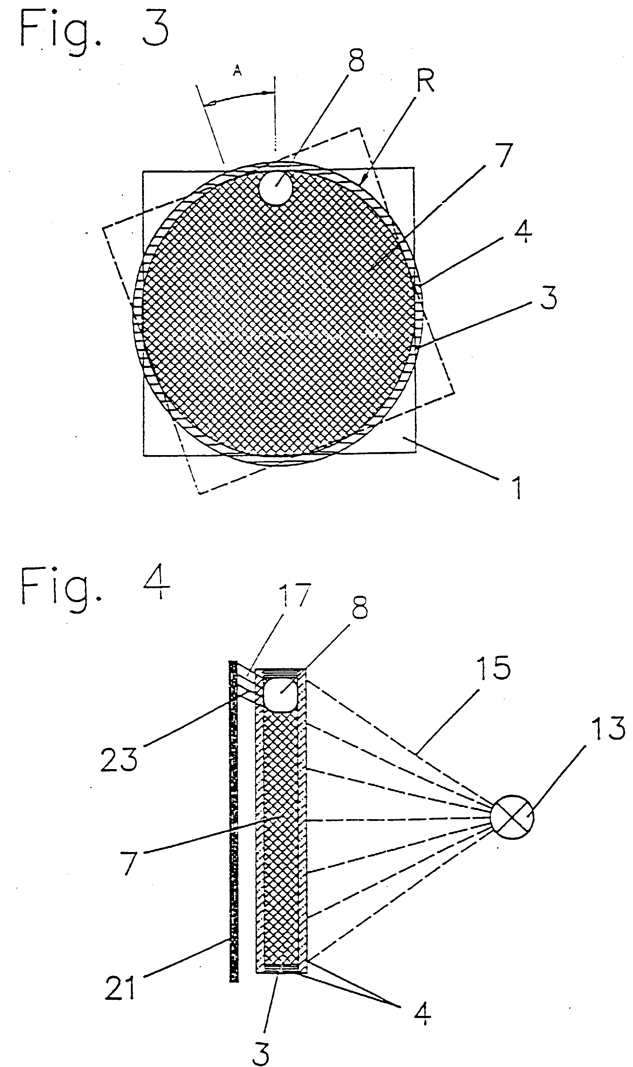

In den Figuren 3 und 4 umfaßt die Meßkammer 1 einen scheibenartigen kreisförmigen Hohlkörper 3 mit einer äußeren Wandung 4. Die Kreisscheibe 3 weist dabei quer zur Scheibe einen gleichbleibenden Querschnitt auf. Wiederum enthält der Hohlkörper 3 eine opakte bzw. lichtundurchlässige Flüssigkeit 7 und eine Luftblase 8 oder eine Blase aus einem transparenten oder teilweise transparenten Medium.

Die Funktionsweise des Meßgerätes gemäß den Figuren 3 und 4 ist analog desjenigen des vorab beschriebenen Meßgerätes.

Der Vorteil der beiden Meßgeräte liegt darin, daß die Relativlage bzw. Winkelabweichung eines Objektes um eine ganze Kreisdrehung, d.h. um 360° gemessen bzw. ermittelt werden kann.

Die Meßgenauigkeit kann durch die Wahl des Radius R unterschiedlich gewählt werden. Bei einem sehr großen Radius R ist die Meßgenauigkeit selbstverständlich größer als bei einem kleinen Radius R. Allerdings werden die Dimensionen des erfindungsgemäßen Meßgerätes bei der Wahl eines großen Radius R größer, womit der Einsatz ggf. kritisch wird.

Die erfindungsgemäßen Ausführungsvarianten dienen zur Erläuterung und dem besseren Verständnis der Erfindung und können selbstverständlich in beliebiger Art und Weise modifiziert, variiert oder abgeändert werden. So können beliebige Kombinationen von zwei nicht mischbaren Medien gewählt werden, wobei mindestens das eine der Medien, welches quasi als Trägermedium dient, fluid, d.h. flüssig sein muß. Das andere Medium für die Anzeige bzw. das Erfassen der Relativlage eines Objektes gegenüber der Horizontalen kann sowohl fest, flüssig wie auch gasförmig sein. Auch die Ausgestaltung der Meßkammer 1 selbst kann beliebig gewählt werden, grundsätzlich eignen sich sämtliche transparenten Hohlkörper 3. Auch die gewählte Lichtquelle 13 kann entweder sichtbares Licht sein, Infrarot oder UV, wobei selbstverständlich in letzteren Fällen die beiden Medien im Hohlkörper 3 derart zu wählen sind, daß ein Erfassen des emittierten Lichtes auf einem entsprechend sensitiven Detektormaterial möglich ist.

## Patentansprüche

1. Meßgerät zur Bestimmung der Relativlage eines Objektes in Bezug auf eine Horizontalebene, mit einer wenigstens teilweise transparenten Meßkammer (1), in der zwei nicht mischbare Medien (7, 8) mit unterschiedlicher Dichte enthalten sind, wobei eines der Medien (8) wenigstens teilweise transparent und mindestens das andere ein fluides Medium ist, und wobei die Relativlage aufgrund der Position des wenigstens teilsweise transparenten Mediums (8) in der Meßkammer (1) bestimmt wird, mit einer Lichtquelle (13) und einem lichtempfindlichen Sensor (21), auf welchen das von der Lichtquelle (13) durch das wenigstens teilweise transparente Medium (8) transmittierte Licht (17) projiziert und die Projektion (23) zur Bestimmung der Relativlage (A) des Objektes verwendet wird, **dadurch gekennzeichnet,** daß die Lichtquelle (13), die Meßkammer (1) und der lichtempfindliche Sensor (21) hintereinander in einer horizontalen Achse angeordnet sind, daß die Lichtquelle (13) auf einer Seite der Meßkammer (1) und der lichtempfindliche Sensor (21) auf der anderen Seite der Meßkammer (1) angeordnet sind, daß die Meßkammer (1) als kreisrundes Rohr oder als kreischeibenartiger Hohlkörper (3) ausgebildet ist und daß die gesamte Projektion der Meßkammer (1) auf den lichtempfindlichen Sensor (21) abgebildet wird.

2. Meßgerät nach Anspruch 1, dadurch gekennzeichnet, daß wenigstens eines der Medien (7, 8) Licht polarisierend ist.

3. Meßgerät nach Anspruch 1 oder 2, dadurch gekennzeichnet, daß beide Medien fluide Medien (7, 8) sind und das Medium (7) ein opakes bzw. lichtundurchlässiges Medium ist, und die beiden Medien (7, 8) in einem transparenten Hohlkörper (3) insbesondere aus Glas eingeschlossen sind.

4. Meßgerät nach einem der vorhergehenden Ansprüche, dadurch gekennzeichnet, daß die Menge des transparenten bzw. lichtdurchlässigen Mediums (8) in bezug auf die Menge des opaken Mediums (7) klein ist.

5. Meßgerät nach einem der vorhergehenden Ansprüche, dadurch gekennzeichnet, daß das transparente Medium (8) im Zenith bzw. der Zenithgegenseite des Hohlkörpers (3) angeordnet ist.

6. Meßgerät nach einem der vorhergehenden Ansprüche, dadurch gekennzeichnet, daß der Hohlkörper (3) einen gleichbleibendem Querschnitt senkrecht zum Rohr bzw. zur Scheibe aufweist.

7. Meßgerät nach einem der vorhergehenden Ansprüche, dadurch gekennzeichnet, daß der lichtempfindliche Sensor (21) ein positionsempfindlicher Detektor oder ein matrizenartiger Detektor ist.

8. Verfahren zur Bestimmung der Relativlage eines Objektes in Bezug auf eine Horizontalebene mittels eines Meßgerätes nach einem der vorhergehenden Ansprüche, dadurch gekennzeichnet, daß von einer Lichtquelle (13), angeordnet auf einer Seite einer Meßkammer (1), Licht durch die Meßkammer (1) durch das wenigstens teilweise transparente fluide Medium (8) transmittiert und auf einen auf der gegenüberliegend angeordneten Seite der Meßkammer (1) angeordneten lichtempfindlichen flächigen Sensor (21) projiziert wird, wobei aus der Position der Projektion (23) auf dem Sensor (21) die Relativlage (A) des Objektes bestimmt wird.

9. Verfahren nach Anspruch 8, dadurch gekennzeichnet, daß der Schwerpunkt des transmittierten Lichtfleckes bzw. der Projektion (23) auf dem lichtempfindlichen Sensor (21) ermittelt wird und aus diesem Wert die Relativlage (A) bzw. Winkellage bestimmt und mittels geeigneter Mittel angezeigt wird.

10. Verwendung des optischen Meßgerätes nach einem der Ansprüche 1 bis 7, für die Autonivellierung eines in einer bestimmten Lage zu haltenden Objektes, indem die vom Meßgerät erfaßte Relativlage (A) des Objektes dazu verwendet wird, eine anfällig von einer bestimmten Lage, welche das Objekt einzunehmen hat, ermittelte Abweichung durch geeignete Maßnahmen zu verringern bzw. auszugleichen.

11. Verwendung eines Meßgerätes nach einem der Ansprüche 1 bis 7 als Höhenwinkelmeßgerät bzw. als Inklinometer, indem das Höhenmeßgerät bzw. der Inklinometer an einem oder an beiden Schenkeln je mit einem optischen Meßgerät nach einem der Ansprüche versehen ist und die Höhenwinkelmessung bzw. die Messung der Inklination aus der Relativlage (A) der beiden Schenkel zueinander bzw. je gegenüber der Horizontalen erfolgt.

12. Verwendung eines Meßgerätes nach einem der Ansprüche 1 bis 7 zum Erfassen der Beschleunigung eines Objektes, indem die zeitliche Veränderung der Anzeige der Relativlage (A) bzw. der Winkellage gemessen bzw. bestimmt wird.

13. Verwendung eines Meßgerätes nach einem der Ansprüche 1 bis 7, in einem künstlichen Horizont bspw. eines Fluggerätes zur Bestimmung der Abweichung bzw. die Relativlage (A) eines Objektes wie bspw. eines Fluggerätes gegenüber der Horizontalen.

## Claims

1. Measuring instrument for determining the relative position of an object in relation to a horizontal plane, comprising an at least partially transparent measuring chamber (1) containing two non-miscible media (7, 8) with different densities, one of the media (8) being at least partially transparent and at least the other being a fluid medium, and the relative position being determined on the basis of the position of the at least partially transparent medium (8) in the measuring chamber, comprising a light source (13) and a light-sensitive sensor (21) on to which the light (17) transmitted from the light source (13) through the at least partially transparent medium (8) is projected, the projection (23) being used to determine the relative position (A) of the object, characterised in that the light source (13), the measuring chamber (1) and the light-sensitive sensor (21) are arranged one behind the other along a horizontal axis, that the light source (13) is arranged on one side of the measuring chamber (1) and the light-sensitive sensor (21) is arranged on the other side of the measuring chamber (1), that the measuring chamber (1) is a circular tube or a circular disc-shaped hollow body (3) and that the entire projection of the measuring chamber (1) is projected on to the light-sensitive sensor (21).

2. Measuring instrument according to claim 1, characterised in that at least one of the media (7, 8) is light polarising.

3. Measuring instrument according to claim 1 or claim 2, characterised in that the two media are fluid media (7, 8) and the medium (7) is an opaque medium, and the two media (7, 8) are enclosed in a transparent hollow body (3), in particular of glass.

4. Measuring instrument according to one of the preceding claims, characterised in that the quantity of the transparent medium (8) is small in relation to the quantity of the opaque medium (7).

5. Measuring instrument according to one of the preceding claims, characterised in that the transparent medium (8) is arranged in or opposite the zenith of the hollow body (3).

6. Measuring instrument according to one of the preceding claims, characterised in that the hollow body (3) has a constant cross section perpendicular to the tube or disc.

7. Measuring instrument according to one of the preceding claims, characterised in that the light-sensitive sensor (21) is a position-sensitive detector or a matrix-type detector.

8. Method of determining the relative position of an object in relation to a horizontal plane by means of a measuring instrument according to one of the preceding claims, characterised in that light from a light source (13) arranged on one side of a measuring chamber (1) is transmitted through the measuring chamber (1) through the at least partially transparent fluid medium (8) and is projected on to a light-sensitive flat sensor (21) arranged on the opposite side of the measuring chamber (1), the relative position (A) of the object being determined from the position of the projection (23) on the sensor (21).

9. Method according to claim 8, characterised in that the centroid of the transmitted light spot or projection (23) on the light-sensitive sensor (21) is determined and the relative position (A) or angular position is determined from this value and indicated by means of suitable means.

10. Use of the optical measuring instrument according to one of claims 1 to 7 for the automatic levelling of an object to be held in a specific position, in which the relative position (A) of the object determined by the measuring instrument is used to reduce or compensate for any likely deviation of the object from a specific position to be adopted by suitable measures.

11. Use of a measuring instrument according to one of claims 1 to 7 as an altimeter or inclinometer, in which the altimeter or inclinometer is provided on one or both arms with an optical measuring instrument according to one of the claims and the angle of elevation or inclination is measured from the relative position (A) of the two arms in relation to one another or to the horizontal.

12. Use of a measuring instrument according to one of claims 1 to 7 for detecting the acceleration of an object, in which the variation over time of the indication of the relative position (A) or angular position is measured or determined.

13. Use of a measuring instrument according to one of claims 1 to 7 in an artificial horizon, e.g. of an aircraft, for determining the deviation or the relative position (A) of an object, e.g. an aircraft in relation to the horizontal.

## Revendications

1. Appareil de mesure, pour la détermination de la position relative d'un objet par rapport un plan horizontal, avec une chambre de mesure (1) au moins partiellement transparente, dans laquelle sont contenus deux milieux (7, 8) non miscibles, ayant une masse volumique différente, l'un des milieux (8) étant au moins partiellement transparent et au moins l'autre étant un milieu fluide, et la position relative étant déterminée d'après la position du milieu (8) au moins partiellement transparent dans la chambre de mesure (1), avec une source lumineuse (13) et un capteur photosensible (21), sur lequel la lumière (17), transmise par la source lumineuse (13), à travers le milieu (8) au moins partiellement transparent, est projetée et la projection (23) étant utilisée pour la détermination de la position relative (A) de l'objet, caractérisé en ce que la source lumineuse (13), la chambre de mesure (1) et le capteur photosensible (21) sont disposés les uns derrière les autres selon un axe horizontal, en ce que la source lumineuse (13) est disposée d'un côté de la chambre de mesure (1) et le capteur photosensible (21) est disposé de l'autre côté de la chambre de mesure (1), en ce que la chambre de mesure (1) est réalisée sous forme de tube à section transversale circulaire ou de corps creux (3) du type d'un panneau circulaire, et en ce que la projection globale de la chambre de mesure (1) est l'objet d'une représentation sur le capteur photosensible (21).

2. Appareil de mesure selon la revendication 1, caractérisé en ce qu'au moins l'un des milieux (7, 8) a un effet de polarisation de la lumière.

3. Appareil de mesure selon la revendication 1 ou 2, caractérisé en ce que les deux milieux sont des milieux fluides (7, 8) et le milieu (7) est un milieu opaque, respectivement imperméable à la lumière, et les deux milieux (7, 8) sont inclus dans un corps creux (3) transparent, en particulier en verre.

4. Appareil de mesure selon l'une des revendications précédentes, caractérisé en ce que la quantité de milieu (8) transparent, respectivement perméable à la lumière, est petite par rapport à la quantité de milieu opaque (7).

5. Appareil de mesure selon l'une des revendications précédentes, caractérisé en ce que le milieu transparent (8) est disposé au zénith, respectivement du côté opposé au zénith du corps creux (3).

6. Appareil de mesure selon l'une des revendications précédentes, caractérisé en ce que le corps creux (3) présente une section transversale constante, en observant perpendiculairement par rapport au tube ou au panneau.

7. Appareil de mesure selon l'une des revendications précédentes, caractérisé en ce que le capteur photosensible (21) est un détecteur à sensibilité de position ou bien un détecteur au type matriciel.

8. Procédé de détermination de la position relative d'un objet par rapport à un plan horizontal, au moins d'un appareil de mesure selon l'une des revendications précédentes, caractérisé en ce que, depuis une source lumineuse (13), disposée d'un côté d'une chambre de mesure (1), de la lumière est transmise à travers la chambre de mesure (1), à travers le milieu (8) fluide au moins partiellement transparent, et est projetée sur un capteur (21) plat, photosensible, disposé sur le côté opposé de la chambre de mesure (1), la position relative (A) de l'objet étant déterminée à partir de la position de la projection (23) sur le capteur (21).

9. Procédé selon la revendication 8, caractérisé en ce que le centre de gravité de la tache lumineuse transmise ou de la projection (23) sur le capteur photosensible (21) est déterminé et la position relative (A) ou la position angulaire est déterminée à partir de cette valeur et affichée à l'aide de moyens appropriés.

10. Utilisation de l'appareil de mesure optique selon l'une des revendications 1 à 7, pour l'auto-nivellement d'un objet à maintenir dans une position déterminée, en utilisant la position relative (A) de l'objet, appréhendée par l'appareil de mesure, afin de limiter ou de compenser, au moyen de dispositions appropriées, un écart éventuel par rapport à une position déterminée que l'objet doit respecter.

11. Utilisation d'un appareil de mesure selon l'une des revendications 1 à 7 comme appareil de mesure de la position de l'angle d'élévation ou comme inclinomètre, du fait que l'appareil de mesure de hauteur, respectivement l'inclinomètre est respectivement pourvu, sur l'une ou les deux branches, d'un appareil de mesure optique réalisé selon l'une des revendications et la mesure de l'angle d'élévation ou la mesure de l'inclinaison s'effectuant à partir de la position relative (A) des deux branches l'une par rapport à l'autre, respectivement de chacune par rapport à l'horizontale.

12. Utilisation d'un appareil de mesure selon l'une des revendications 1 à 7 pour appréhender l'accélération d'un objet, en mesurant ou déterminant la modification temporelle de l'affichage de la position relative (A) ou de la position angulaire.

13. Utilisation d'un appareil de mesure selon l'une des revendications 1 à 7, dans un norizon artificiel, par exemple d'un aéronef, pour déterminer l'écart ou la position relative (A) d'un objet tel que, par exemple un aéronef par rapport à l'horizontale.
